# EUROPEAN PATENT SPECIFICATION

(11) **EP 4 030 607 B1**
(45) Date of publication and mention of the grant of the patent: **29.10.2025**
(21) Application number: 22151626.3
(22) Date of filing: 14.01.2022
(51) Int. Cl.: H02M 3/156, H02M 1/00, H02M 1/32

(54) **CONTROL METHOD AND CONTROL DEVICE OF ISOLATED CONVERTER**
STEUERUNGSVERFAHREN UND STEUERUNGSVORRICHTUNG EINES ISOLIERTEN WANDLERS
PROCEDE DE COMMANDE ET DISPOSITIF DE COMMANDE D'UN CONVERTISSEUR ISOLE

(30) Priority: 14.01.2021 CN 202110047186
(43) Date of publication of application: 20.07.2022
(73) Proprietor: Eaton Intelligent Power Limited, Dublin 4 (IE)
(72) Inventor: FAN, Tai, Shenzhen, 518101 (CN); XIE, Kaijun, Shenzhen, 518101 (CN); ZHANG, Huaichao, Shenzhen, 518101 (CN); KUANG, Xiaoya, Shenzhen, 518101 (CN); CHENG, Yuan, Shenzhen, 518101 (CN)
(74) Representative: Schwan Schorer & Partner mbB

(56) References cited:
- EP-A1- 0 250 464
- EP-B1- 0 250 464
- JP-A- 2004 215 417
- JP-A- 2006 246 681
- JP-A- 2014 168 355
- US-A1- 2003 090 914
- PANOV Y ET AL: "PERFORMANCE EVALUATION OF 70-W TWO-STAGE ADAPTERS FOR NOTEBOOK COMPUTERS", APEC '99. 14TH ANNUAL APPLIED POWER ELECTRONICS CONFERENCE AND EXPOSITION. DALLAS,TX, MARCH 14 - 18, 1999; [ANNUAL APPLIED POWER ELECTRONICS CONFERENCE], NEW YORK, NY : IEEE, US, vol. 2, 14 March 1999 (1999-03-14), pages 1059 - 1065, XP001004134, ISBN: 978-0-7803-5161-5

## Description

### TECHNICAL FIELD

The present invention pertains to the field of power electronics, and in particular to a control method and control device for an isolated converter.

### BACKGROUND

A high-frequency transformer-based isolated converter is widely used in the field of power sources, especially in boost conversion of a battery voltage, and a push-pull DC-DC converter and a full-bridge DC-DC converter are most typical high-frequency transformer-based isolated converters.

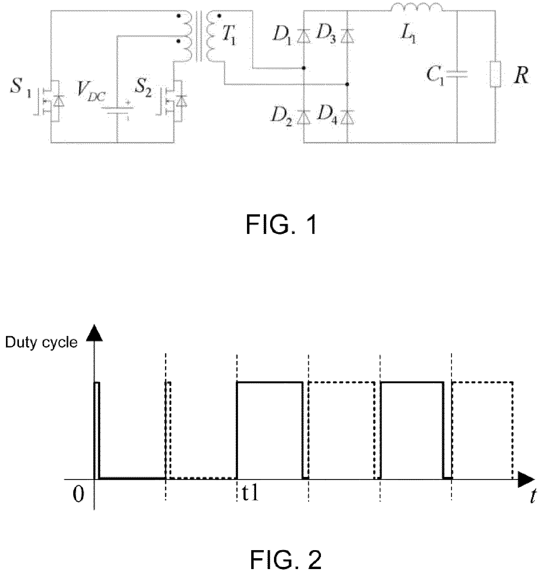

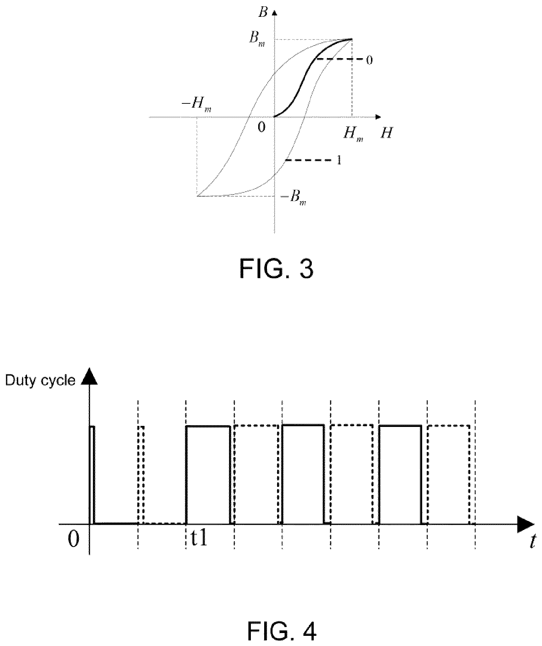

FIG. 1 is a typical push-pull converter topology. An output voltage of a DC power source Voc supplies power to a load R by means of a transformer T₁, a rectifier bridge formed by diodes D1-D4, and an inductor L₁. A capacitor C₁ is connected in parallel to the load R. Two switching transistors S₁ and S₂ are turned on alternately. In a no-load state, respective duty cycles of the switching transistors S₁ and S₂ are very small. When a heavy load is suddenly applied, respective duty cycles of the switching transistors S₁ and S₂ increase rapidly. Referring to respective driving waveforms of the switching transistors S₁ and S₂ shown in FIG. 2, the solid line and the dashed line respectively correspond to the driving waveform of S₁ and the driving waveform of S₂. At a time point t1, a heavy load is suddenly applied to the no-load converter. Because excitation of the transformer T₁ is very small before the time point t1, the excitation is ignored and considered to be approximately 0 herein. An overly large duty cycle following the time point t1 forms an overly large unidirectional excitation change as shown in a curve 0 in FIG. 3, and the overly large unidirectional excitation change is prone to cause the transformer T₁ to be magnetically saturated. A curve 1 in FIG. 3 is an excitation curve corresponding to normal operation.

In order to solve this problem, a conventional method is to increase respective switching frequencies of S₁ and S₂. The driving waveforms are as shown in FIG. 4, and the solid line and the dashed line respectively correspond to the driving waveform of S₁ and the driving waveform of S₂. At the time point t1, a heavy load is suddenly applied to the no-load converter, and the duty cycle increases rapidly. However, because a switching period is shortened, on duration is also shorter than on duration in FIG. 2, and therefore the transformer is prevented from being magnetically saturated. However, increasing the switching frequency significantly increases switching loss, and the increased switching loss further results in other problems such as a temperature rise.

In summary, for the high-frequency transformer-based isolated converter, when an output load is suddenly changed from no load to a full load, a driving pulse width of a switching transistor on a primary side of the transformer is suddenly changed from a very small duty cycle to a very large duty cycle. Because excitation of the transformer is very small in an initial stage, an overly large unidirectional excitation change is prone to cause magnetic induction intensity of the transformer to exceed a maximum value allowable for operation and therefore cause the transformer to be magnetically saturated. In order to prevent the transformer from being magnetically saturated, a conventional method is to increase a switching frequency of the switching transistor on the primary side of the transformer. However, this method significantly increases the switching loss, and increases heat dissipation costs of the converter.

Document JP2014168355A proposes an active clamp circuit for a forward DC/DC converter to turn the excitation of the main transformer positive and negative in order to reduce the maximum value of the magnetic flux density of the main transformer and to prevent its saturation.

### SUMMARY

Therefore, the objective of the present invention is to eliminate the aforementioned defects of the prior art. A control device for an isolated converter is provided, according to device claim 1.

In the control device for the isolated converter according to the present invention, preferably, the control device further comprises a measurement module used to measure and output the load amount of the isolated converter.

Preferably, the switching frequency is gradually decreased to the second frequency value at a specific step size, or is gradually decreased to the second frequency value according to a charging curve and a discharging curve of an RC circuit.

In the control device for the isolated converter according to the present invention, preferably, the control device comprises a microcontroller, a time delay circuit, a transistor, a first resistor, a second resistor, a first capacitor, and a pulse width modulation chip, wherein
the microcontroller changes an output voltage thereof on the basis of the comparison result of the load amount of the isolated converter and the pre-configured thresholds;
an output end of the microcontroller is connected to a base of the transistor via the time delay circuit, an emitter of the transistor is grounded, a collector of the transistor is connected to a first pin of the pulse width modulation chip via the first resistor, a node between the first pin and the first resistor is grounded via the second resistor, and a second pin of the pulse width modulation chip is grounded via the first capacitor;
an output end of the pulse width modulation chip is connected to a switch of the isolated converter so as to adjust the switching frequency of the switching transistor,
wherein the time delay circuit is used to achieve direct increase and gradual decrease of an output frequency of the pulse width modulation chip.

In the control device for the isolated converter according to the present invention, preferably, the time delay circuit comprises a third resistor, a fourth resistor, a fifth resistor, a diode, and a second capacitor, a series branch formed by the third resistor and the fourth resistor is connected in parallel to a series branch formed by the diode and the fifth resistor, a node between the third resistor and the diode is connected to an output end of a digital signal module of the microcontroller, a node between the fourth resistor and the fifth resistor is connected to the base of the transistor, and a node between the third resistor and the fourth resistor is grounded via the second capacitor.

In the control device for the isolated converter according to the present invention, preferably, the time delay circuit comprises an analog signal module, a software control unit, and a third resistor, the analog signal module is connected to the output end of the microcontroller, the software control unit is used to control an output analog signal of the analog signal module, the analog signal end is connected to one end of the third resistor, and the other end of the third resistor is connected to the base of the transistor.

In the control device for the isolated converter according to the present invention, preferably, the output end of the pulse width modulation chip is connected to the switching transistor of the isolated converter via a drive amplification circuit.

In the control device for the isolated converter according to the present invention, preferably, the comparison module is comprised in the microcontroller.

In the control device for the isolated converter according to the present invention, preferably, the control device comprises an MCU connected to the switching transistor of the isolated converter, and the control device changes a period register value of a PWM generation module thereof on the basis of the comparison result of the load amount of the isolated converter and the pre-configured thresholds so as to change the switching frequency of the switching transistor.

The present invention further provides a control method for an isolated converter, the control method comprising the steps defined in method claim 9.

Compared with the prior art, in the present invention, the switching frequency is adjusted by monitoring and measuring the load amount, thereby solving the problem of temperature rising of the converter that occurs when the converter is fully loaded and operates stably, and effectively preventing the transformer from being magnetically saturated when a load is suddenly applied to the no-load converter.

### BRIEF DESCRIPTION OF THE DRAWINGS

Embodiments of the present invention are further described below with reference to the accompanying drawings:
FIG. 1 is a typical push-pull converter topology;
FIG. 2 shows respective driving waveforms of switching transistors S₁ and S₂ in the converter topology in FIG. 1;
FIG. 3 shows an excitation curve of a transformer in the converter topology in FIG. 1 based on the driving waveforms shown in FIG. 2;
FIG. 4 shows other respective driving waveforms of switching transistors S₁ and S₂ in the converter topology in FIG. 1;
FIG. 5 shows a flowchart of a switching frequency adjustment method for an isolated converter according to a first embodiment of the present invention;
FIG. 6 and FIG. 7 respectively show changes in a transformer excitation curve corresponding to increasing switching frequency and decreasing switching frequency;
FIG. 8 shows a switching frequency adjustment device for an isolated converter according to a second embodiment of the present invention;
FIG. 9 shows a schematic diagram of a circuit structure of a first example of a switching frequency adjustment device of the present invention;
FIG. 10 shows an example of a charging curve and a discharging curve of an RC circuit; and
FIG. 11 shows a schematic diagram of a circuit structure according to a second example of a switching frequency adjustment device of the present invention.

### DETAILED DESCRIPTION OF THE EMBODIMENTS

In order to make the objectives, technical solutions, and advantages of the present invention clearer, the present invention is further described in detail below via specific embodiments with reference to the accompanying drawings. It should be understood that the specific embodiments described herein are only intended to explain the present invention rather than to limit the present invention.

### First Embodiment

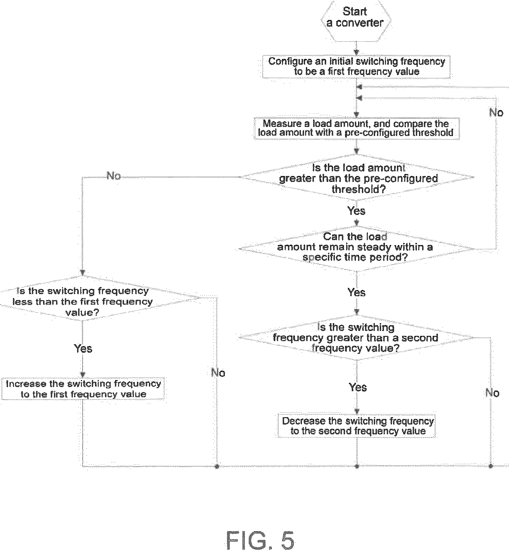

An embodiment of the present invention provides a switching frequency adjustment method for an isolated converter. The adjustment method adjusts a switching frequency according to a load so as to reduce switching loss. For the specific adjustment method, please refer to the flowchart shown in FIG. 5. The adjustment method includes the following steps:
step 1, start an isolated converter, and configure an initial switching frequency to be a first frequency value (for example, 55 kHz);
step 2, measure a load amount, and compare the load amount with a pre-configured threshold (for example, 50% of rated power), where in the present invention, the load amount is preferably load power; and
step 3, adjust the switching frequency of the isolated converter on the basis of a comparison result of the load amount and the pre-configured threshold, where when the load amount is not greater than the pre-configured threshold, the switching frequency is increased to the first frequency value, and when the load amount is greater than the pre-configured threshold and is in a steady state, the switching frequency is decreased to a second frequency value. In the present invention, the steady state refers to that the load amount remains at a constant value or remains substantially at a constant value (for example, fluctuating between 90% and 110% of the constant value) within a specific time period (for example, 2 s). However, this definition of the steady state is merely exemplary and is not limiting.

Specifically, it is determined whether the load amount is greater than the pre-configured threshold.

If not, then it is further determined whether a current switching frequency is less than the first frequency value. If the switching frequency is less than the first frequency value, then the switching frequency is increased to the first frequency value. If the switching frequency is not less than the first frequency value (is usually equal to the first frequency value), then the switching frequency is not adjusted, and load amount measurement continues. That is, if the load amount is not greater than the pre-configured threshold, then a high switching frequency (the first frequency value) is maintained to prevent a transformer of the isolated converter from being magnetically saturated. That is, magnetic induction intensity is maintained to be lower than or equal to maximum magnetic induction intensity at which the transformer is allowed to operate.

If so, then it is further determined whether the load amount is in the steady state. If the load amount is not steady, then load amount measurement continues. If the load amount is in the steady state, then it is further determined whether the current switching frequency is greater than the second frequency value (for example, 40 kHz). If the switching frequency is greater than the second frequency value, then the switching frequency is decreased to the second frequency value. If the switching frequency is not greater than the second frequency value (is usually equal to the second frequency value), then the switching frequency is not adjusted, and load amount measurement continues. That is, if the load amount is greater than the pre-configured threshold and is in the steady state, then a low switching frequency (the second frequency value) is maintained so that a temperature of the isolated converter does not exceed a maximum allowable temperature. The maximum temperature is a maximum temperature that components of the isolated converter can withstand.

In the present invention, the high first frequency value and the low second frequency value are selected according to a specific product model and an application scenario, and are preferably in the range of 1-500 kHz.

In this embodiment, in order to prevent a system from repeatedly adjusting the switching frequency due to that an output load falls exactly at a load switching point (for example, 50% of a rated load), a load switching hysteresis loop can be added. For example, a hysteresis loop width is configured to be 10% of the rated load.

When the load amount is less than 45%, the high switching frequency is used.

When the load amount is 45%-55%, the current switching frequency remains unchanged.

When the load amount is greater than 55%, the switching frequency is gradually decreased to the low switching frequency.

That is, a pre-configured threshold range is configured on the basis of the aforementioned pre-configured threshold. When the load amount is less than a minimum value of the pre-configured threshold range, the high switching frequency is used. When the load amount is greater than a maximum value of the pre-configured threshold range, the low switching frequency is used. When the load amount is exactly within the pre-configured threshold range, the original switching frequency remains unchanged, and the switching frequency is not adjusted.

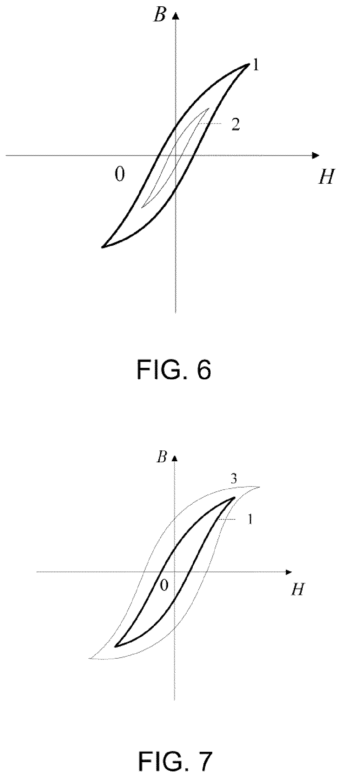

In addition, please refer to changes in a transformer excitation curve corresponding to increasing switching frequency shown in FIG. 6 and changes in a transformer excitation curve corresponding to decreasing switching frequency shown in FIG. 7. When the switching frequency increases, the transformer excitation curve changes from a curve 1 to a curve 2 in FIG. 6. The excitation curve shrinks, and the transformer is therefore not to be saturated. Therefore, the switching frequency can be increased rapidly. For example, the switching frequency jumps from a current frequency to the first frequency value (namely, changing from the current frequency directly to the first frequency value). When the switching frequency decreases, the transformer excitation curve changes from a curve 1 to a curve 3 in FIG. 7. Because the excitation curve expands, a sudden change in the frequency may cause the transformer to be saturated, and therefore, the switching frequency is gradually decreased at a specific step size, so that the excitation curve changes smoothly, thereby preventing the transformer from being saturated. The specific step size may be a fixed value. For example, the switching frequency is gradually decreased to the second frequency value at a step size of 1 kHz. The specific step size may also be a variable value. For example, the switching frequency is gradually decreased to the second frequency value at a random step size of 1 kHz, 2 kHz, or 3 kHz.

### Second Embodiment

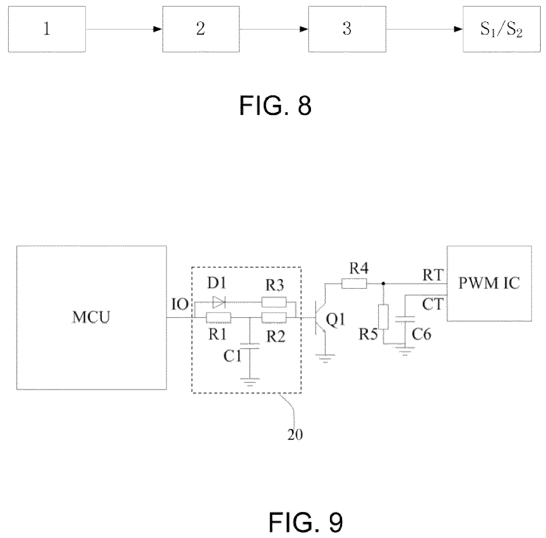

The second embodiment provides a switching frequency adjustment device for an isolated converter. Referring to FIG. 8, the switching frequency adjustment device includes a measurement module 1, a comparison module 2, and an adjustment module 3. The measurement module 1 is used to measure a load amount and transmit a measurement result to the comparison module 2. The measurement module 1 may be a built-in measurement module in the isolated converter, and may also be a peripheral measurement module. A pre-configured threshold is prestored in the comparison module 2, and the comparison module 2 compares the received load amount with the pre-configured threshold, and transmits a comparison result to the adjustment module 3. The adjustment module 3 adjusts a switching frequency of a switching transistor S₁ or S₂ on the basis of the received comparison result, and meanwhile the switching frequency of the switch S₁ or S₂ can be fed back to the adjustment module 3. When the load amount is not greater than the pre-configured threshold, the switching frequency is increased to a first frequency value. When the load amount is greater than the pre-configured threshold and is in a steady state, the switching frequency is decreased to a second frequency value. Specifically, the adjustment module determines whether the load amount is greater than the pre-configured threshold.

If not, then it is further determined whether a current switching frequency is less than the first frequency value. If the switching frequency is less than the first frequency value, then the switching frequency is increased to the first frequency value. If the switching frequency is not less than the first frequency value (is usually equal to the first frequency value), then the switching frequency is not adjusted, and load amount measurement continues. That is, if the load amount is not greater than the pre-configured threshold, then a high switching frequency (the first frequency value) is maintained.

If so, then it is further determined whether the load amount is in the steady state. If the load amount is not steady, then load amount measurement continues. If the load amount is in the steady state, then it is further determined whether the current switching frequency is greater than the second frequency value (for example, 40 kHz). If so, then the switching frequency is decreased to the second frequency value. If the switching frequency is not greater than the second frequency value (is usually equal to the second frequency value), then the switching frequency is not adjusted, and load amount measurement continues. That is, if the load amount is greater than the pre-configured threshold and is in the steady state, then a low switching frequency (the second frequency value) is maintained.

Preferably, a pre-configured threshold range is prestored in the comparison module 2. When the load amount is less than a minimum value of the pre-configured threshold range, the high switching frequency is used. When the load amount is greater than a maximum value of the pre-configured threshold range, the low switching frequency is used. When the load amount is exactly within the pre-configured threshold range, the original switching frequency remains unchanged, and the switching frequency is not adjusted.

Preferably, the adjustment module 3 gradually decreases the switching frequency of the switching transistor S₁ or S₂ at a specific step size.

Specific examples of the switching frequency adjustment device for the isolated converter are provided below.

### First Example

Please refer to a schematic diagram of a circuit structure of the first example of the switching frequency adjustment device of the present invention shown in FIG. 9. A microcontroller MCU receives a comparison result of a load amount and a pre-configured threshold, and outputs a digital voltage signal by means of a digital interface IO on the basis of the comparison result. The digital voltage signal passes through a time delay circuit 20, controls a switching status (including an on state, an amplification state, and an off state) of a transistor Q1 to adjust external resistors R4 and R5 outside a pulse width modulation chip (PWM IC) oscillator so as to adjust an oscillation frequency of the PWM IC. The oscillation frequency corresponds to an output frequency of the PWM IC. The PWM IC is preferably connected to switching transistors S₁ and S₂ by means of a drive circuit so as to adjust a switching frequency thereof. The switching frequency is consistent with the output frequency of the PWM IC. Specifically, the time delay circuit 20 includes resistors R1 and R2 connected in series to each other, a diode D1 and a resistor R3 connected in series to each other, and a capacitor C1. A branch formed by the resistors R1 and R2 is connected in parallel to a branch formed by the diode D1 and the resistor R3. A node between the resistor R1 and the diode D1 is connected to an IO interface of the MCU. A node between the resistors R1 and R2 is grounded by means of the capacitor C1. A node between the resistors R2 and R3 is connected to a base of the transistor Q1. An emitter of the transistor Q1 is grounded. A collector of the transistor Q1 is connected to an RT pin of the PWM IC by means of a resistor R4. A CT pin of the PWM IC is grounded by means of a capacitor C6. A node between the resistor R4 and the RT pin is grounded by means of a resistor R5.

A detailed control process of the switching frequency adjustment device of this example is as follows:
(1) When an IO output signal of the MCU changes from a low level to a high level, D1 is turned on. A high-level voltage is provided to the base of Q1 by means of D1, and therefore Q1 is saturated and turned on. Connection between R4 and R5 is equivalent to parallel connection. In this case, because a resistance value of the RT pin of the PWM IC is small, the output frequency of the PWM IC is high.
   In addition, the high level outputted by the MCU charges C1 by means of R1, and a voltage of C1 is gradually increased from a low level to a high level so as to prepare for changing of the MCU output from a high level to a low level.
(2) When the IO output signal of the MCU changes from the high level to the low level, the high-level C1 discharges by means of R1, and gradually changes from the high level to the low level. Q1 changes from a saturated on region to an amplification region and gradually to an off region. In this case, because the resistance value of the RT pin of the PWM IC is large and is equal to that of R5, the output frequency of the PWM IC is low.

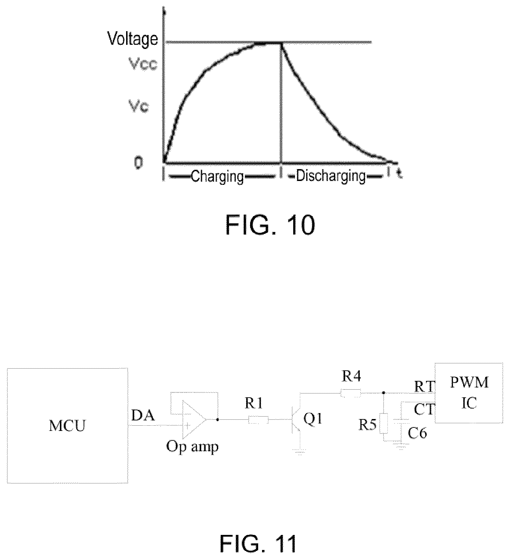

In this process, duration in which the output frequency of the PWM IC gradually changes from a high frequency to a low frequency depends on duration in which C1 discharges by means of R1. That is, the switching frequency is gradually decreased according to a charging curve and a discharging curve of an RC circuit, such as the example of a charging curve and a discharging curve of an RC circuit shown in FIG. 10.
It can be seen that in this example:
1) When the level of the digital voltage signal of the MCU changes, the output frequency of the PWM IC also changes synchronously.
2) By adjusting the time delay circuit, especially respective parameters of R1 and C1, a voltage change speed of C1 can be changed, and therefore an operation status of the transistor Q1 can be changed. If the collector (the C electrode) and the emitter (the E electrode) of the transistor are considered to be equivalent to a resistor, then a resistance value of the equivalent resistor changes with the voltage of C1. From the perspective of the PWM IC, a parallel resistance value of external oscillation resistors connected to the PWM IC changes with the voltage of C1, and this finally results in that the output frequency of the PWM IC changes with the voltage of C1. Therefore, by adjusting respective parameters of R1 and C1, the voltage change speed of C1 can be changed, and therefore a change speed of the output frequency of the PWM IC can be changed, thereby achieving rapid increase and gradual decrease of the output frequency of the PWM IC.
3) By adjusting a resistance value of R4, a resistance value of the external RT pin of the PWM IC can be changed, and therefore a change range of the output frequency of the PWM IC can be adjusted.

Those skilled in the art can understand that in this example, a comparison module may be included in the microcontroller MCU. The comparison module receives load amount information, and compares the load amount with the pre-configured threshold.

### Second Example

Please refer to a schematic diagram of a circuit structure according to the second example of the switching frequency adjustment device of the present invention shown in FIG. 11. On the basis of a comparison result of a load amount and a pre-configured threshold, Output of an MCU passes through an analog signal module (a DA module), and a variable analog voltage signal (DA output) is outputted. Preferably, drive capability is enhanced by means of a follower Op amp buffer, and then a switching status (including an on state, an amplification state, and an off state) of a transistor Q1 is controlled by means of a resistor R1 to adjust external resistors R4 and R5 outside a pulse width modulation chip (PWM IC) oscillator so as to adjust an oscillation frequency of the PWM IC. The oscillation frequency corresponds to an output frequency of the PWM IC. The PWM IC is preferably connected to switching transistors S₁ and S₂ by means of a drive circuit so as to adjust a switching frequency thereof. The switching frequency is consistent with the output frequency of the PWM IC. The analog signal module may be included in the MCU, and may also be arranged outside the MCU. Specifically, in this example, the analog signal module (the DA module), a software control unit for controlling an analog signal, the preferred follower, and the resistor R1 form a time delay circuit. A change speed of the output signal of the DA module is controlled by means of the software control unit so as to achieve rapid increase and gradual decrease of the output frequency of the PWM IC. In addition, in this example, a circuit following the resistor R1 is consistent with that in the first example. That is, an emitter of the transistor Q1 is grounded. A collector of the transistor Q1 is connected to an RT pin of the PWM IC by means of the resistor R4. A CT pin of the PWM IC is grounded by means of a capacitor C6. A node between the resistor R4 and the RT pin is grounded by means of the resistor R5.

A detailed control process of the switching frequency adjustment device of this example is as follows:
(1) When a DA output signal of the MCU rapidly changes from a low level to a high level, Q1 is saturated and turned on. Connection between R4 and R5 is equivalent to parallel connection. In this case, because a resistance value of the RT pin of the PWM IC is small, the output frequency of the PWM IC is high.
(2) When the DA output signal of the MCU gradually changes from the high level to the low level, Q1 changes from a saturated on region to an amplification region and gradually to an off region. In this case, because the resistance value of the RT pin of the PWM IC is large and is equal to that of R5, the output frequency of the PWM IC is low.

In this process, a speed at which the output frequency of the PWM IC gradually changes from a high frequency to a low frequency depends on a change speed of the DA signal controlled by the software unit.
It can be seen that in this example:
1) When the level of the DA output of the MCU changes, the output frequency of the PWM IC also changes synchronously.
2) By adjusting the time delay circuit, rapid increase and gradual decrease of the output frequency of the PWM IC can be achieved.
3) By adjusting a resistance value of R4, the resistance value of the external RT pin of the PWM IC can be changed, and therefore a change range of the output frequency of the PWM IC can be adjusted.

The time delay circuit according to the present invention is not limited to the circuit structures in the examples, and may have other variations as long as rapid increase and gradual decrease of the oscillation frequency of the PWM IC can be achieved.

In addition to implementing switching frequency adjustment by means of the hardware circuits in the aforementioned two examples, a digital control chip may also be used to implement switching frequency adjustment on S1 and S2 by means of software. For example, this can be readily implemented by changing a period register value of a PWM generation module in the MCU.
1) When the switching frequency needs to be rapidly increased, the period register value of the PWM generation module is directly changed to a target value.
2) When the switching frequency needs to be gradually decreased, a looping instruction is used to gradually change the period register value of the PWM generation module to the target value. By changing the target value of a period register, the change range of the switching frequency can be changed. By changing the number of times of looping and an amount of change in the period register value, the change speed of the switching frequency can be changed.

In order to demonstrate the effect of the present invention, the inventor performed a test on Callisto HV RT 3kVA produced by Eaton. A method in the prior art was used. In order to prevent a transformer from being saturated, a switching frequency was configured to be 55 kHz. Discharging of a fully loaded battery resulted in a temperature rise. A temperature of a MOSFET rose over 140°C, but was still not steady. Therefore, the machine has to be turned off to end the test, and it was predicted that a highest temperature may reach 155°C. The solution of the present invention was used to perform a test again. The highest temperature of the MOSFET was lower than 110°C. Therefore, the problem of a temperature rise of a transformer is effectively solved.

Although the present invention has been described through preferred embodiments, the present invention is not limited to the embodiments described herein, but includes various changes and variations made within the scope of the appended claims.

## Claims

1. A control device for an isolated converter, the control device comprising:
a comparison module (2), for receiving a load amount of the isolated converter, comparing the load amount with a first pre-configured threshold and a second pre-configured threshold, and outputting a comparison result; and
an adjustment module (3), for receiving the comparison result and adjusting a switching frequency of a switching transistor (S₁, S₂) of the isolated converter on the basis of the comparison result, wherein when the load amount is not greater than the first pre-configured threshold, the switching frequency is configured to be a first frequency value so as to prevent a transformer (T₁) of the isolated converter from being magnetically saturated, and when the load amount is greater than the second pre-configured threshold and is in a steady state, the switching frequency is configured to be a second frequency value so that a temperature of the isolated converter does not exceed a maximum allowable temperature, wherein the first pre-configured threshold is less than or equal to the second pre-configured threshold, and the first frequency value is greater than the second frequency value,
**characterized in that**
the control device is configured to directly increase the switching frequency to the first frequency value, when the load amount is not greater than the first pre-configured threshold, and if the switching frequency is less than the first frequency value; and further configured to gradually decrease the switching frequency to the second frequency value at a specific step size, when the load amount is greater than the second pre-configured threshold and is in a steady state, and if the switching frequency is greater than the second frequency value, such that an excitation curve of the transformer changes smoothly, thereby preventing the transformer from being saturated.

2. The control device for the isolated converter according to claim 1, **characterized in that**, the control device further comprising a measurement module (1) conf igured to measure and output the load amount of the isolated converter.

3. The control device for the isolated converter according to claim 3, the control device comprising a microcontroller (MCU), a time delay circuit (20), a transistor (Q1), a first resistor (R4), a second resistor (R5), a first capacitor (C6), and a pulse width modulation chip (PWM IC), wherein
the microcontroller (MCU) is configured to change an output voltage thereof on the basis of the comparison result of the load amount of the isolated converter and the pre-configured thresholds;
an output end of the microcontroller (MCU) is connected to a base of the transistor (Q1) via the time delay circuit (20), an emitter of the transistor (Q1) is grounded, a collector of the transistor (Q1) is connected to a first pin (RT) of the pulse width modulation chip (PWM IC) via the first resistor (R4), a node between the first pin (RT) and the first resistor (R4) is grounded via the second resistor (R5), and a second pin (CT) of the pulse width modulation chip (PWM IC) is grounded via the first capacitor (C6);
an output end of the pulse width modulation chip (PWM IC) is connected to the switching transistor (S1, S2) of the isolated converter so as to adjust the switching frequency of the switching transistor (S₁, S₂),
wherein the time delay circuit (20) is configured to achieve direct increase and gradual decrease of an output frequency of the pulse width modulation chip (PWM IC).

4. The control device for the isolated converter according to claim 3, wherein the time delay circuit (20) comprises a third resistor (R1), a fourth resistor (R2), a fifth resistor (R3), a diode (D1), and a second capacitor (C1), a series branch formed by the third resistor (R1) and the fourth resistor (R2) is connected in parallel to a series branch formed by the diode (D1) and the fifth resistor (R3), a node between the third resistor (R1) and the diode (D1) is connected to an output end of a digital signal module of the microcontroller (MCU), a node between the fourth resistor (R2) and the fifth resistor (R3) is connected to the base of the transistor (Q1), and a node between the third resistor (R1) and the fourth resistor (R2) is grounded via the second capacitor (C1).

5. The control device for the isolated converter according to claim 3, **characterized in that**, the time delay circuit (20) comprises an analog signal module (DA), a software control unit, and a third resistor (R1), the analog signal module (DA) is connected to the output end of the microcontroller (MCU), the software control unit is configured to control an output analog signal of the analog signal module (DA), the analog signal end is connected to one end of the third resistor (R1), and the other end of the third resistor (R1) is connected to the base of the transistor (Q1).

6. The control device for the isolated converter according to any one of claims 3-5, **characterized in that**, the output end of the pulse width modulation chip (PWM IC) is connected to the switching transistor (S₁, S₂) of the isolated converter via a drive amplification circuit.

7. The control device for the isolated converter according to any one of claims 4-5, **characterized in that**, the comparison module (2) is comprised in the microcontroller (MCU).

8. The control device for the isolated converter according to claim 1, **characterized in that**, the control device comprising a pulse width modulation chip (PWM IC) connected to the switching transistor (S₁, S₂) of the isolated converter, the pulse width modulation chip (PWM IC) configured to change a period register value of a generation module thereof on the basis of the comparison result of the load amount of the isolated converter and the pre-configured thresholds so as to change the switching frequency of the switching transistor (S₁, S₂).

9. A control method for an isolated converter, the control method comprising the following steps:
a comparison step, for comparing a load amount of the isolated converter with a first pre-configured threshold and a second pre-configured threshold; and
an adjustment step, for adjusting a switching frequency of a switching transistor (S₁, S₂) of the isolated converter on the basis of a comparison result of the comparison step, wherein when the load amount is not greater than the first pre-configured threshold, the switching frequency is configured to be a first frequency value so as to prevent a transformer (T₁) of the isolated converter from being magnetically saturated, and when the load amount is greater than the second pre-configured threshold and is in a steady state, the switching frequency is configured to be a second frequency value so that a temperature of the isolated converter does not exceed a maximum allowable temperature, wherein the first pre-configured threshold is less than or equal to the second pre-configured threshold, and the first frequency value is greater than the second frequency value,
**characterized by** further comprising the following steps:
directly increasing the switching frequency to the first frequency value, when the load amount is not greater than the first pre-configured threshold, and if the switching frequency is less than the first frequency value; and
gradually decreasing the switching frequency to the second frequency value at a specific step size, when the load amount is greater than the second pre-configured threshold and is in a steady state, and if the switching frequency is greater than the second frequency value, such that an excitation curve of the transformer changes smoothly, thereby preventing the transformer from being saturated.

## Patentansprüche

1. Steuerungsvorrichtung für einen isolierten Wandler, wobei die Steuerungsvorrichtung Folgendes umfasst:
ein Vergleichsmodul (2) zum Empfangen einer Lastmenge des isolierten Wandlers, zum Vergleichen der Lastmenge mit einem ersten vorkonfigurierten Schwellenwert und einem zweiten vorkonfigurierten Schwellenwert und zum Ausgeben eines Vergleichsergebnisses; und
ein Einstellmodul (3) zum Empfangen des Vergleichsergebnisses und Einstellen einer Schaltfrequenz eines Schalttransistors (S₁, S₂) des isolierten Wandlers auf der Grundlage des Vergleichsergebnisses, wobei, wenn die Lastmenge nicht größer als der erste vorkonfigurierte Schwellenwert ist, die Schaltfrequenz konfiguriert ist, um ein erster Frequenzwert zu sein, um zu verhindern, dass ein Transformator (T₁) des isolierten Wandlers magnetisch gesättigt wird, und, wenn die Lastmenge größer als der zweite vorkonfigurierte Schwellenwert ist und sich in einem stationären Zustand befindet, die Schaltfrequenz konfiguriert ist, um ein zweiter Frequenzwert zu sein, sodass eine Temperatur des isolierten Wandlers eine maximal zulässige Temperatur nicht überschreitet, wobei der erste vorkonfigurierte Schwellenwert kleiner oder gleich dem zweiten vorkonfigurierten Schwellenwert ist und der erste Frequenzwert größer als der zweite Frequenzwert ist,
**dadurch gekennzeichnet, dass**
die Steuerungsvorrichtung konfiguriert ist, um die Schaltfrequenz direkt auf den ersten Frequenzwert zu erhöhen, wenn die Lastmenge nicht größer als der erste vorkonfigurierte Schwellenwert ist und wenn die Schaltfrequenz kleiner als der erste Frequenzwert ist; und ferner konfiguriert ist, um die Schaltfrequenz allmählich in einer bestimmten Schrittweite auf den zweiten Frequenzwert zu verringern, wenn die Lastmenge größer als der zweite vorkonfigurierte Schwellenwert ist und sich im stationären Zustand befindet und wenn die Schaltfrequenz größer als der zweite Frequenzwert ist, sodass sich eine Erregungskurve des Transformators sanft ändert und dadurch eine Sättigung des Transformators verhindert wird.

2. Steuerungsvorrichtung für den isolierten Wandler nach Anspruch 1, **dadurch gekennzeichnet, dass** die Steuerungsvorrichtung ferner ein Messmodul (1) umfasst, das zum Messen und Ausgeben der Lastmenge des isolierten Wandlers konfiguriert ist.

3. Steuerungsvorrichtung für den isolierten Wandler nach Anspruch 1, wobei die Steuerungsvorrichtung eine Mikrosteuerung (MCU), eine Zeitverzögerungsschaltung (20), einen Transistor (Q1), einen ersten Widerstand (R4), einen zweiten Widerstand (R5), einen ersten Kondensator (C6) und einen Pulsweitenmodulationschip (PWM IC) umfasst, wobei
die Mikrosteuerung (MCU) konfiguriert ist, um eine Ausgangsspannung davon auf der Grundlage des Vergleichsergebnisses der Lastmenge des isolierten Wandlers und der vorkonfigurierten Schwellenwerte zu ändern;
ein Ausgangsende der Mikrosteuerung (MCU) über die Zeitverzögerungsschaltung (20) mit einer Basis des Transistors (Q1) verbunden ist, ein Emitter des Transistors (Q1) geerdet ist, ein Kollektor des Transistors (Q1) über den ersten Widerstand (R4) mit einem ersten Stift (RT) des Pulsweitenmodulationschips (PWM IC) verbunden ist, ein Knoten zwischen dem ersten Stift (RT) und dem ersten Widerstand (R4) über den zweiten Widerstand (R5) geerdet ist und ein zweiter Stift (CT) des Pulsweitenmodulationschips (PWM IC) über den ersten Kondensator (C6) geerdet ist;
ein Ausgangsende des Pulsweitenmodulationschips (PWM IC) mit dem Schalttransistor (S1, S2) des isolierten Wandlers verbunden ist, um die Schaltfrequenz des Schalttransistors (S₁, S₂) einzustellen,
wobei die Zeitverzögerungsschaltung (20) konfiguriert ist, um eine direkte Erhöhung und allmähliche Verringerung einer Ausgangsfrequenz des Pulsweitenmodulationschips (PWM IC) zu erreichen.

4. Steuerungsvorrichtung für den isolierten Wandler nach Anspruch 3, wobei die Zeitverzögerungsschaltung (20) einen dritten Widerstand (R1), einen vierten Widerstand (R2), einen fünften Widerstand (R3), eine Diode (D1) und einen zweiten Kondensator (C1) umfasst, ein durch den dritten Widerstand (R1) und den vierten Widerstand (R2) gebildeter Reihenzweig parallel zu einem durch die Diode (D1) und den fünften Widerstand (R3) gebildeten Reihenzweig geschaltet ist, ein Knoten zwischen dem dritten Widerstand (R1) und der Diode (D1) mit einem Ausgangsende eines digitalen Signalmoduls der Mikrosteuerung (MCU) verbunden ist, ein Knoten zwischen dem vierten Widerstand (R2) und dem fünften Widerstand (R3) mit der Basis des Transistors (Q1) verbunden ist und ein Knoten zwischen dem dritten Widerstand (R1) und dem vierten Widerstand (R2) über den zweiten Kondensator (C1) geerdet ist.

5. Steuerungsvorrichtung für den isolierten Wandler nach Anspruch 3, **dadurch gekennzeichnet, dass** die Zeitverzögerungsschaltung (20) ein analoges Signalmodul (DA), eine Software-Steuerungseinheit und einen dritten Widerstand (R1) umfasst, das analoge Signalmodul (DA) mit dem Ausgangsende der Mikrosteuerung (MCU) verbunden ist, die Software-Steuerungseinheit konfiguriert ist, um ein analoges Ausgangssignal des analogen Signalmoduls (DA) zu steuern, das analoge Signalende mit einem Ende des dritten Widerstands (R1) verbunden ist und das andere Ende des dritten Widerstands (R1) mit der Basis des Transistors (Q1) verbunden ist.

6. Steuerungsvorrichtung für den isolierten Wandler nach einem der Ansprüche 3 bis 5, **dadurch gekennzeichnet, dass** das Ausgangsende des Pulsweitenmodulationschips (PWM IC) mit dem Schalttransistor (S₁, S₂) des isolierten Wandlers über eine Antriebsverstärkungsschaltung verbunden ist.

7. Steuerungsvorrichtung für den isolierten Wandler nach einem der Ansprüche 3 bis 5, **dadurch gekennzeichnet, dass** das Vergleichsmodul (2) in der Mikrosteuerung (MCU) enthalten ist.

8. Steuerungsvorrichtung für den isolierten Wandler nach Anspruch 1, **dadurch gekennzeichnet, dass** die Steuerungsvorrichtung einen Pulsweitenmodulationschip (PWM IC) umfasst, der mit dem Schalttransistor (S₁, S₂) des isolierten Wandlers verbunden ist, wobei der Pulsweitenmodulationschip (PWM IC) konfiguriert ist, um einen Periodenregisterwert eines Erzeugungsmoduls davon auf der Grundlage des Vergleichsergebnisses der Lastmenge des isolierten Wandlers und der vorkonfigurierten Schwellenwerte zu ändern, um die Schaltfrequenz des Schalttransistors (S₁, S₂) zu ändern.

9. Steuerungsverfahren für einen isolierten Wandler, wobei das Steuerungsverfahren die folgenden Schritte umfasst:
einen Vergleichsschritt zum Vergleichen einer Lastmenge des isolierten Wandlers mit einem ersten vorkonfigurierten Schwellenwert und einem zweiten vorkonfigurierten Schwellenwert; und
einen Einstellschritt zum Einstellen einer Schaltfrequenz eines Schalttransistors (S₁, S₂) des isolierten Wandlers auf der Grundlage eines Vergleichsergebnisses des Vergleichsschritts, wobei, wenn die Lastmenge nicht größer als der erste vorkonfigurierte Schwellenwert ist, die Schaltfrequenz konfiguriert ist, um ein erster Frequenzwert zu sein, um zu verhindern, dass ein Transformator (T₁) des isolierten Wandlers magnetisch gesättigt wird, und, wenn die Lastmenge größer als der zweite vorkonfigurierte Schwellenwert ist und sich in einem stationären Zustand befindet, die Schaltfrequenz konfiguriert ist, um ein zweiter Frequenzwert zu sein, sodass eine Temperatur des isolierten Wandlers eine maximal zulässige Temperatur nicht überschreitet, wobei der erste vorkonfigurierte Schwellenwert kleiner oder gleich dem zweiten vorkonfigurierten Schwellenwert ist und der erste Frequenzwert größer als der zweite Frequenzwert ist,
**dadurch gekennzeichnet, dass** es ferner die folgenden Schritte umfasst:
direktes Erhöhen der Schaltfrequenz auf den ersten Frequenzwert, wenn die Lastmenge nicht größer als der erste vorkonfigurierte Schwellenwert ist und wenn die Schaltfrequenz kleiner als der erste Frequenzwert ist; und
allmähliches Verringern der Schaltfrequenz auf den zweiten Frequenzwert in einer bestimmten Schrittweite, wenn die Lastmenge größer als der zweite vorkonfigurierte Schwellenwert ist und sich im stationären Zustand befindet, und wenn die Schaltfrequenz größer als der zweite Frequenzwert ist, sodass sich eine Erregungskurve des Transformators sanft ändert und dadurch eine Sättigung des Transformators verhindert wird.

## Revendications

1. Dispositif de commande pour un convertisseur isolé, le dispositif de commande comprenant :
un module de comparaison (2), pour recevoir une quantité de charge du convertisseur isolé, comparer la quantité de charge avec un premier seuil préconfiguré et un second seuil préconfiguré, et délivrer un résultat de comparaison ; et
un module d'ajustement (3), pour recevoir le résultat de la comparaison et ajuster une fréquence de commutation d'un transistor de commutation (S₁, S₂) du convertisseur isolé sur la base du résultat de la comparaison, dans lequel lorsque la quantité de charge n'est pas supérieure au premier seuil préconfiguré, la fréquence de commutation est configurée pour être une première valeur de fréquence afin d'empêcher un transformateur (T₁) du convertisseur isolé d'être saturé magnétiquement, et lorsque la quantité de charge est supérieure au second seuil préconfiguré et est dans un état stable, la fréquence de commutation est configurée pour être une seconde valeur de fréquence de sorte qu'une température du convertisseur isolé ne dépasse pas une température maximale admissible, dans lequel le premier seuil préconfiguré est inférieur ou égal au second seuil préconfiguré, et la première valeur de fréquence est supérieure à la seconde valeur de fréquence,
**caractérisé en ce que**
le dispositif de commande est configuré pour augmenter directement la fréquence de commutation jusqu'à la première valeur de fréquence, lorsque la quantité de charge n'est pas supérieure au premier seuil préconfiguré, et si la fréquence de commutation est inférieure à la première valeur de fréquence ; et configuré en outre pour diminuer progressivement la fréquence de commutation jusqu'à la seconde valeur de fréquence à une taille de pas spécifique, lorsque la quantité de charge est supérieure au second seuil préconfiguré et est à l'état stable, et si la fréquence de commutation est supérieure à la seconde valeur de fréquence, de telle sorte qu'une courbe d'excitation du transformateur change en douceur, empêchant ainsi le transformateur d'être saturé.

2. Dispositif de commande pour le convertisseur isolé selon la revendication 1, **caractérisé en ce que** le dispositif de commande comprend en outre un module de mesure (1) configuré pour mesurer et sortir la quantité de charge du convertisseur isolé.

3. Dispositif de commande pour le convertisseur isolé selon la revendication 1, le dispositif de commande comprenant un microcontrôleur (MCU), un circuit de temporisation (20), un transistor (Q1), une première résistance (R4), une deuxième résistance (R5), un premier condensateur (C6) et une puce de modulation de largeur d'impulsion (PWM IC), dans lequel
le microcontrôleur (MCU) est configuré pour modifier une tension de sortie de celui-ci sur la base du résultat de comparaison de la quantité de charge du convertisseur isolé et des seuils préconfigurés ;
une extrémité de sortie du microcontrôleur (MCU) est connectée à une base du transistor (Q1) par l'intermédiaire du circuit de temporisation (20), un émetteur du transistor (Q1) est mis à la terre, un collecteur du transistor (Q1) est connecté à une première broche (RT) de la puce de modulation de largeur d'impulsion (PWM IC) par l'intermédiaire de la première résistance (R4), un noeud entre la première broche (RT) et la première résistance (R4) est mis à la terre par l'intermédiaire de la deuxième résistance (R5), et une seconde broche (CT) de la puce de modulation de largeur d'impulsion (PWM IC) est mise à la terre par l'intermédiaire du premier condensateur (C6) ;
une extrémité de sortie de la puce de modulation de largeur d'impulsion (PWM IC) est connectée au transistor de commutation (S1, S2) du convertisseur isolé afin d'ajuster la fréquence de commutation du transistor de commutation (S₁, S₂),
dans lequel le circuit de temporisation (20) est configuré pour réaliser une augmentation directe et une diminution progressive d'une fréquence de sortie de la puce de modulation de largeur d'impulsion (PWM IC).

4. Dispositif de commande pour le convertisseur isolé selon la revendication 3, dans lequel le circuit de temporisation (20) comprend une troisième résistance (R1), une quatrième résistance (R2), une cinquième résistance (R3), une diode (D1) et un second condensateur (C1), une branche série formée par la troisième résistance (R1) et la quatrième résistance (R2) est connectée en parallèle à une branche série formée par la diode (D1) et la cinquième résistance (R3), un nœud entre la troisième résistance (R1) et la diode (D1) est connecté à une extrémité de sortie d'un module de signal numérique du microcontrôleur (MCU), un nœud entre la quatrième résistance (R2) et la cinquième résistance (R3) est connecté à la base du transistor (Q1), et un noeud entre la troisième résistance (R1) et la quatrième résistance (R2) est mis à la terre par l'intermédiaire du second condensateur (C1).

5. Dispositif de commande pour le convertisseur isolé selon la revendication 3, **caractérisé en ce que** le circuit de temporisation (20) comprend un module de signal analogique (DA), une unité de commande logicielle et une troisième résistance (R1), le module de signal analogique (DA) est connecté à l'extrémité de sortie du microcontrôleur (MCU), l'unité de commande logicielle est configurée pour régler un signal analogique de sortie du module de signal analogique (DA), l'extrémité de signal analogique est connectée à une extrémité de la troisième résistance (R1), et l'autre extrémité de la troisième résistance (R1) est connectée à la base du transistor (Q1).

6. Dispositif de commande pour le convertisseur isolé selon l'une quelconque des revendications 3 à 5, **caractérisé en ce que** l'extrémité de sortie de la puce de modulation de largeur d'impulsion (PWM IC) est connectée au transistor de commutation (S₁, S₂) du convertisseur isolé par l'intermédiaire d'un circuit d'amplification d'excitation.

7. Dispositif de commande pour le convertisseur isolé selon l'une quelconque des revendications 3 à 5, **caractérisé en ce que** le module de comparaison (2) est compris dans le microcontrôleur (MCU).

8. Dispositif de commande pour le convertisseur isolé selon la revendication 1, **caractérisé en ce que** le dispositif de commande comprend une puce de modulation de largeur d'impulsion (PWM IC) connectée au transistor de commutation (S₁, S₂) du convertisseur isolé, la puce de modulation de largeur d'impulsion (PWM IC) configurée pour modifier une valeur de registre de période d'un module de génération de celle-ci sur la base du résultat de comparaison de la quantité de charge du convertisseur isolé et des seuils préconfigurés de façon à modifier la fréquence de commutation du transistor de commutation (S₁, S₂).

9. Procédé de commande d'un convertisseur isolé, le procédé de commande comprenant les étapes suivantes :
une étape de comparaison, consistant à comparer une quantité de charge du convertisseur isolé avec un premier seuil préconfiguré et un second seuil préconfiguré ; et
une étape d'ajustement, consistant à ajuster une fréquence de commutation d'un transistor de commutation (S₁, S₂) du convertisseur isolé sur la base d'un résultat de comparaison de l'étape de comparaison, dans lequel lorsque la quantité de charge n'est pas supérieure au premier seuil préconfiguré, la fréquence de commutation est configurée pour être une première valeur de fréquence de façon à empêcher un transformateur (T₁) du convertisseur isolé d'être saturé magnétiquement, et lorsque la quantité de charge est supérieure au second seuil préconfiguré et est dans un état stable, la fréquence de commutation est configurée pour être une seconde valeur de fréquence de sorte qu'une température du convertisseur isolé ne dépasse pas une température maximale admissible, dans lequel le premier seuil préconfiguré est inférieur ou égal au second seuil préconfiguré, et la première valeur de fréquence est supérieure à la seconde valeur de fréquence,
**caractérisé en ce qu'**il comprend en outre les étapes suivantes :
augmentation directe de la fréquence de commutation jusqu'à la première valeur de fréquence, lorsque la quantité de charge n'est pas supérieure au premier seuil préconfiguré, et si la fréquence de commutation est inférieure à la première valeur de fréquence ; et
diminution progressive de la fréquence de commutation jusqu'à la seconde valeur de fréquence à une taille de pas spécifique, lorsque la quantité de charge est supérieure au second seuil préconfiguré et est à l'état stable, et si la fréquence de commutation est supérieure à la seconde valeur de fréquence, de telle sorte qu'une courbe d'excitation du transformateur change en douceur, empêchant ainsi le transformateur d'être saturé.
